# EUROPEAN PATENT SPECIFICATION

(11) **EP 3 071 378 B1**
(45) Date of publication and mention of the grant of the patent: **29.11.2017**
(21) Application number: 14814999.0
(22) Date of filing: 17.11.2014
(51) Int. Cl.: B26D 1/18, A22C 17/00, B23D 45/02

(54) **BONE CUTTING DEVICE**
KNOCHENSÄGE
SCIE À OS

(30) Priority: 18.11.2013 IT TO20130933
(43) Date of publication of application: 28.09.2016
(73) Proprietor: Crea S.N.C. Di Crea Paolo & C., 10139 Torino (IT)
(72) Inventor: CREA, Paolo, 80180 Bordighera (IM) (IT)
(74) Representative: Bruni, Giovanni
(86) International application number: PCT/IB2014/002457
(87) International publication number: WO 2015/071744

(56) References cited:
- EP-A1- 1 700 657
- EP-A1- 2 500 124
- WO-A2-2005/020692
- FR-A- 808 211
- GB-A- 255 266

## Description

The present invention relates to a new cutting device intended to cut bones, which is extremely robust, reliable and safe, easy to be managed and to be used. Generally, at the state of the art there are known bone cutting machine tools, intended to cut meat or fish, fresh or frozen, or bones. Such devices provide the use of great blades, usually of band type, fixed on a horizontal plane, on which the piece of meat to be cut is positioned and pushed by means of a "meat pushing" tool. Anyway, the known bone cutting machines have many drawbacks both technical and relating the user safety. A first drawback is represented by the use of the fixed blade of band type, which is very dangerous for the user and, allowing cuts only in a direction, forces the user to carry out little safe movements to remove the piece on which he is working. Moreover, the use of this kind of blade makes the device little versatile and limits its use considerably since it can be used only for some specific cuts. Therefore the user has to equip himself with smaller and easier to handle devices to carry out smaller cuts and in directions other than the one obliged by the fixed blade. A cutting device according to the preamble of claim 1 is known from EP 1 700 657 A1. In addition, the protections commonly used in the devices of traditional type are not comfortable for the user and are usually the cause of serious accidents.

Therefore, aim of the present invention is to solve the disadvantages of the known bone cutting devices.

The aim is solved by means of a new bone cutting device able to protect the operator from many kinds of accidents due to the use of the currently available machines and also able to carry out, by means of predetermined movements, cuts in different positions so that it is obtained a smaller and easy to handle final product, and able to carry out all the cutting operations without using other tools. Another advantage of the present invention is the possibility to carry out cuts on pieces of any dimension and shape. Finally, one last advantage is the possibility, for the operator, to work in a faster, besides safe, way, and so to optimize the time available.

These and other advantages will be better highlighted in the detailed description of the invention which refers specifically to drawings 1 to 2, figures 1 to 3, which show a not limiting preferred embodiment of the present invention. In particular:
Fig. 1 shows a plan view of the bone cutting device;
Fig. 2 shows a side view of the bone cutting device;
Fig. 3 shows a section of the bone cutting device.

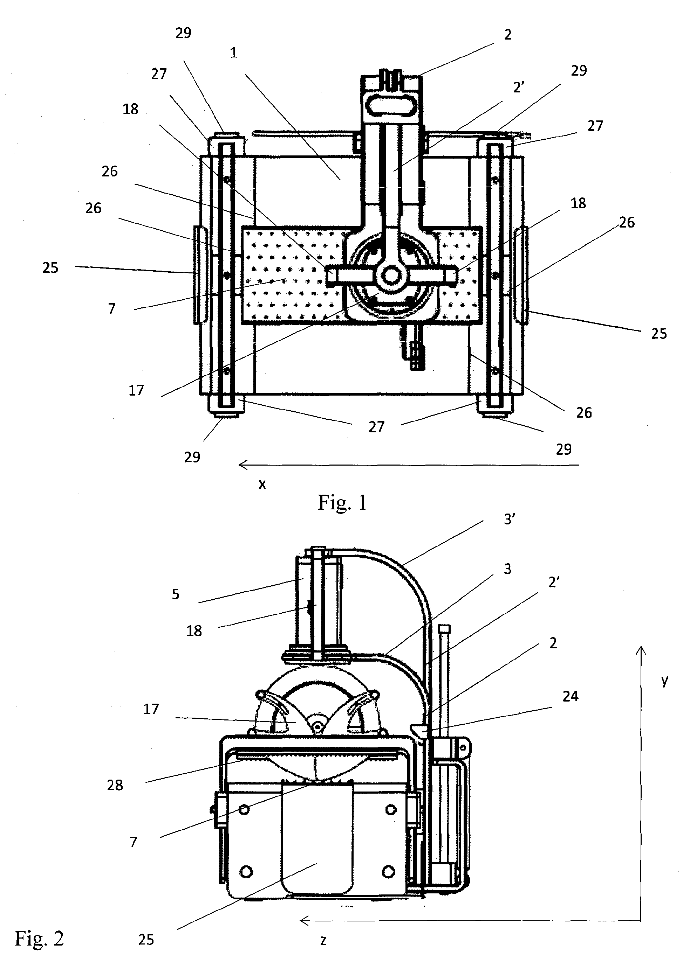

The object of the present invention as shown in fig. 1 and fig. 2 comprises, according to a preferred embodiment, a box 1 having in the rear portion an arm 2, 2' comprising a first portion 2 and a second portion 2'. Said first portion 2 has an end part 3 and said second portion 2' has an end part 3'. The arm 2, 2', in its entirety, is sliding assembled, vertically (y axis) and horizontally (x axis), and in the end part 3 of its first portion 2 is inserted a cutting device 17, appropriate to cut the work piece (i.e. a meat piece), fixed by fastening means 7, 28 to the horizontal plane of the box 1, specified in the figures as xz plane. Arm 2, 2' activation is carried out by known operation means, i.e. piston means.

The arm 2, 2' is adjustable in height, its two portions being able to move up and down along the vertical axis y of the cutting device, and being able the arm 2, 2' also to move along the x direction of the working plane, showed in the figures as xz plane.

As previously said, the arm 2, 2' vertically moves along the y axis. Its top position is limited by the length of the arm, while its bottom position is determined by an "end stop" (not shown in the figures) which allows to separate the blade from the working plane of about 3 mm, so as not to allow the blade to strike against the work plan itself.

A rubber or steel rise (not shown in the figures) of a height of about 2.5 cm can be housed in the arm 2,2' to adjust the position of the "end stop", for example in the event that it is necessary to increase the blade distance from the plane. The sliding of the arm 2, 2' horizontally, in the direction of the x axis, is self-limited and stops in conjunction with guidelines 26 placed on the working surface, which indicate the end stops to the operator during the piece cutting phase.

The arm 2, 2' end parts 3, 3' are each other connected by means of two handles 18, placed laterally to the motor box 5 and having each a starting button 4 in the front. These handles 18 are used by the operator to move the arm 2, 2' and, accordingly to easily move the cutting device 17.

The arm 2, 2' comprises elastic and damping means, configured to ensure the slow and automatic upwards movement of the arm 2, 2', as soon as the operator releases the handles 18.

Moreover the box 1, preferably in the portion above the cutting means 17, is provided with a starting button of known type and therefore not visible in the figures.

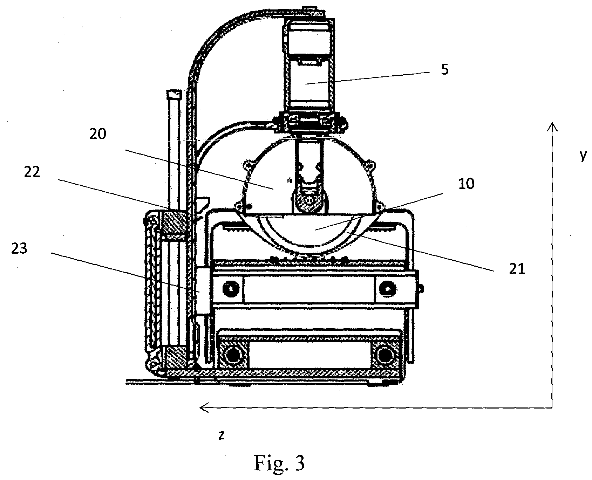

Finally, as also shown in Fig. 3, the box 1 comprises, in the rear part and fixed to the arm 2, 2', a wall 22 and a container 23. The wall 22 holds any work residuals, while the container 23 collects the surplus, avoiding its dispersion. All is configured as a single and removable element, as required. Above said wall 22, on the arm 2, 2', there is a pointer 24 (for example a laser pointer) that lights with a line the blade contact point on the work piece; both the wall 22 and the container 23, and also the pointer 24 move together with the arm 2, 2' following the the operator in its movements.

In the upper part of the cutting means 17 there is a blade protecting box 20. Said blade protecting box 20 entirely covers one side of the blade 10 and partially covers, in its upper half, the other side to allow cleaning or rapid technical interventions.

Moreover, inside it, rested on the blade 10, there are two "blade scrapers" (not shown in the figures) useful to avoid that working residues enter into the motor. Finally, outside the blade protection box 20, on the side partially covered by the blade 10, there is a plastic blade protection 21 which encloses the same blade and provides a vortex effect which helps the working residues to be expelled outside. Said blade protection 21 has the further function to block the work piece using the operator down pressure but, at the same time, being able to rise up, allow the blade of the cutting means to proceed downward. Moreover, it is removable both to intervene on the blade and for the daily operations of cleaning.

The blade 10 of the cutting means 17 is activated only through the combination of three actions: pressing the power button, simultaneous pressing of the two buttons on the handles 18 and the downward movement of the arm 2, 2' along the vertical axis y. This activation method optimally protects the operator allowing him to control the cutting means instead of the piece to be cut, as in the known machine currently available on market.

The work piece is suitably fixed on the working plane. A first fastening means 7, as it is shown in Figs. 2 and 3, comprising a toothed plate, removable and interchangeable with others, which is positioned on the top of the box 1, or on the working plane. In addition, there are second fastening means 28, positioned upward with respect to the first fastening means 7, one along the right side and the other along the left side and sliding along the working plane. The second fastening means 28 also have a toothed portion facing the first fastening means 7, that allows the firmly positioning of the work piece. The combined action of the fastening means 7, 28, block in a stable way the work piece on the working plane. There are also third fastening means, parallel to the z axis, that can be fixed through the same slots of the first fastening means on sliding arms 27. Said third fastening means, one positioned in the front side and one in the rear side and preferably toothed, leave a central gap on working plane useful to slide the blade when it is rotated for an horizontal cut but firmly lock, like other fastening means, the work piece. The sliding arms 27 are equipped with lock/unlock buttons 29, located both on the front side and on the rear side of the box 1. The box 1 also comprises along the two outer sides two mobile appendices 25, able to be used if necessary for a cross cut. In practice, said mobile appendices 25, during the working phase, can be rotated by an angle greater than 90° with respect to the z axis, to retain any work residuals. Of course, when the cut is completed, mobile appendices 25 may be replaced in a vertical position, not to penalize the overall dimensions of the cutting device.

## Claims

1. Cutting device comprising a box (1) on whose horizontal working plane is positioned a work piece to be cut, first and second fastening means (7, 28) of the work piece on the working plane, an arm (2, 2 ') comprising a first portion (2) and a second portion (2 '), said first portion (2) having an end part (3) and said second portion (2') having a corresponding end part (3') and a cutting device (17) adapted to cut the piece,
- said arm (2, 2') is sliding assembled, vertically along a first axis (y) and horizontally along a second axis (x), on the end part (3) of the arm portion (2) is inserted the cutting device(17,) able to perform a rotation of 360° with respect to its rotational vertical axis, parallel to the y axis, and rotations with respect to axes x and z, and on the end part (3') of the arm portion (2') is connected a motor box (5) that moves the cutting device (17), the device being **characterized in that**;
- said first fastening means (7) comprise a plate, removable and interchangeable with others, positioned on top of the box (1) and said second fastening means (28) are positioned upward of the first fastening means (7) allowing the firmly positioning of the work piece.

2. Cutting device according to claim 1 wherein said arm (2, 2'), able to slide vertically along the y axis, reaches a top position, determined by the length of the arm, and a bottom position determined by an "end stop" which allows to distance the blade of the cutting device (17) from the working surface, being said "end stop " adjustable along the y axis.

3. Cutting device according to claim 1 or 2 wherein said end parts (3, 3') of the arm (2, 2') are each other connected by means of two handles (18), placed laterally with respect to the motor box (5) and having each a starting button in the front.

4. Cutting device according to claim 3, wherein said arm (2, 2') comprises elastic and damping means, configured to ensure the slow and automatic upwards movement of the arm (2, 2'), as soon as the operator releases the handles (18).

5. Cutting device according to one of the preceding claims wherein said cutting means (17) are a circular blade (10) having a blade protecting box (20) that entirely covers one side of the blade and partially, in the upper part, the other side of the blade.

6. Cutting device according to claim 5, wherein said circular blade (10) is provided with two "blade scraper" and a blade protection (21) to avoid that working residues enter inside the motor box and to protect the face of the blade, that the blade protecting box (20) leaves partially uncovered.

7. Cutting device according to one of the preceding claims wherein said box (1) comprises a wall (22) and a container (23) to intercept and collect working residues, and a pointer (24) that lights with a line the blade (10)contact point on the work piece.

8. Cutting device according to one of the preceding claims, wherein said fastening means (7, 28) of the working piece are configured according to a toothed shape.

9. Cutting device according to claim 8, further comprising third fastening means, parallel to the z axis, also toothed, that can be fixed through the slots of the first fastening means (7, 28) on sliding arms (27), equipped with locking / unlocking buttons (29), located both on the front side and on the rear side of the box (1).

10. Cutting device according to one of the preceding claims, wherein said box (1) also comprises along the two outer sides two mobile appendices (25), that during the working phase, rotate by an angle greater than 90° with respect to the z axis for retaining any work residuals.

## Patentansprüche

1. Schneidvorrichtung mit einem Gehäuse (1), an dessen horizontalen Arbeitsebene ein zu schneidendes Werkstück positioniert ist, mit ersten und zweiten Befestigungsmitteln (7, 28) des Werkstücks auf der Arbeitsebene, wobei ein Arm (2, 2') einen ersten Abschnitt (2) und einen zweiten Abschnitt (2') umfasst, wobei der genannte erste Abschnitt (2) ein Endteil (3) und der genannte zweite Abschnitt (2') ein entsprechendes Endteil (3') und eine Schneidvorrichtung (17) umfasst, die geeignet ist, das Stück zu schneiden,
- wobei der genannte Arm (2, 2') verschiebbar vertikal entlang einer ersten Achse (y) und horizontal entlang einer zweiten Achse (x) ausgebildet ist, wobei beim Endteil (3) des Armabschnittes (2) die Schneideinrichtung (17) eingeführt wird, die in der Lage ist, eine Drehung von 360° in Bezug auf seine vertikale Drehachse und parallel zur y-Achse und Drehungen in Bezug auf den Achsen x und z durchzuführen, und am Endteil (3') des Armabschnitts (2') ein Motorgehäuse (5) verbunden ist, das die Schneidvorrichtung (17) bewegt,
wobei die Vorrichtung **dadurch gekennzeichnet** ist:
- die genannten ersten Befestigungsmittel (7) eine Platte umfassen, die abnehmbar und austauschbar mit anderen ist und auf der Oberseite des Gehäuses (1) positionier ist, und wobei die genannten zweiten Befestigungsmittel (28) nach oben von dem ersten Befestigungsmittel (7) derart positioniert sind, dass sie die feste Positionierung des Werkstücks gestatten.

2. Schneidvorrichtung nach Anspruch 1, wobei der genannte Arm (2, 2') in der Lage ist, vertikal entlang der y-Achse zu gleiten, dann erreicht er eine Spitzenposition, die von der Länge des Armes bestimmt wird, und eine Grundposition, die durch einen "Endanschlag" bestimmt wird, die es gestattet, die Klinge der Schneidvorrichtung (17) von der Arbeitsfläche mit Abstand zu halten, wobei der genannte "Endanschlag" einstellbar entlang der Y-Achse ist.

3. Schneidvorrichtung nach Anspruch 1 oder 2, wobei die genannten Endteile (3, 3',) des Arms (2, 2') miteinander mit Hilfe von zwei Handgriffen (18) verbunden sind, die seitlich in Bezug auf das Motorgehäuse (5) angeordnet sind und von denen jede eine Starttaste in der Frontseite aufweist.

4. Schneidvorrichtung nach Anspruch 3, wobei der genannte Arm (2, 2') aus einem elastischen und Dämpfungsmittel besteht und derart konfiguriert ist, um die langsame und automatische Aufwärtsbewegung des Armes (2, 2') zu gewährleisten, sobald der Bediener die Handgriffe (18) löst.

5. Schneidvorrichtung nach einem der vorhergehenden Ansprüchen, wobei die genannten Schneidmittel (17) eine kreisförmige Klinge (10) aufweisen, die ein Gehäuse (20) zum Schutz del Klinge aufweist, das vollständig eine Seite der Klinge und teilweise im oberen Teil die andere Seite der Klinge, überdeckt.

6. Schneidvorrichtung nach Anspruch 5, wobei die genannte kreisförmige Klinge (10) mit zwei "Klingenabstreifer" vorgesehen ist und einen Klingenschutz (21) aufweist, um zu vermeiden dass Arbeitsrückstände innerhalb des Motorgehäuses eindringen, und die Fläche der Klinge zu schützen, die das Gehäuse zum Schutz der Klinge (20) teilweise freigelegt verlässt.

7. Schneidvorrichtung nach einem der vorhergehenden Ansprüchen, wobei das genannte Gehäuse (1) eine Wand (22) und einen Behälter (23) umfasst, um Arbeitsrückstände zu blockieren und sammeln, und einen Zeiger (24) aufweist, der mit einer Linie die Klinge (10) bei der Kontaktstelle mit dem Werkstück leuchtet.

8. Schneidvorrichtung nach einem der vorhergehenden Ansprüche, wobei die genannten Befestigungsmittel (7, 28) des Werkstücks entsprechend einer verzahnten Gestalt konfiguriert sind.

9. Schneidvorrichtung nach Anspruch 8, ferner dritte Befestigungsmittel umfassend, die parallel zu der z-Achse und auch verzahnten sind, wobei sie durch die Schlitze der ersten Befestigungsmittel (7, 28) auf Schiebearmen (27) befestigt werden können, die mit Verriegelungs/Entriegelungs-Tasten (29) ausgestattet sind, die beide auf der Vorderseite und auf der Rückseite des Gehäuses (1) angeordnet sind.

10. Schneidvorrichtung nach einem der vorhergehenden Ansprüche, wobei das genannte Gehäuse (1) auch an den beiden Außenseiten zwei mobile Vorsprünge (25) umfasst, die sich während der Arbeitsphase um einen Winkel drehen, der größer als 90° mit Bezug auf die z-Achse ist, um jeden Arbeitsrückstand zu blockieren.

## Revendications

1. Dispositif de coupe comprenant un boîtier (1) sur le plan de travail horizontal duquel est positionnée une pièce de travail à couper, des premiers et deuxièmes moyens de fixation (7, 28) de la pièce de travail sur le plan d'usinage, un bras (2, 2') comprenant une première partie (2) et une deuxième partie (2'), ladite première partie (2) ayant une partie d'extrémité (3) et ladite deuxième partie (2') ayant une partie d'extrémité correspondante (3') et un dispositif de coupe (17) adapté pour découper la pièce,
- ledit bras (2, 2') est monté coulissant verticalement le long d'un premier axe (y) et horizontalement le long d'un deuxième axe (x), sur la partie d'extrémité (3) de la partie de bras (2) est inséré le dispositif de coupe (17), capable d'effectuer une rotation de 360° par rapport à son axe vertical de rotation, parallèle à l'axe y, et des rotations par rapport aux axes x et z, et sur la partie d'extrémité (3') de la partie de bras (2') est relié un boîtier de moteur (5) qui déplace le dispositif de coupe (17),
le dispositif étant **caractérisé en ce que**:
- lesdits premiers moyens de fixation (7) comprennent une plaque, amovible et interchangeable avec d'autres, positionnée sur le dessus du boîtier (1) et lesdits deuxièmes moyens de fixation (28) sont positionnés vers le haut des premiers moyens de fixation (7) permettant le positionnement ferme de la pièce de travail.

2. Dispositif de coupe selon la revendication 1, dans lequel ledit bras (2, 2'), apte à coulisser verticalement le long de l'axe y, atteint une position en hauteur, déterminée par la longueur du bras, et une position de fond déterminée par une «butée d'extrémité» qui permet d'éloigner la lame du dispositif de coupe (17) à partir de la surface de travail, ladite «butée d'extrémité» étant réglable le long de l'axe y.

3. Dispositif de coupe selon la revendication 1 ou 2, dans lequel lesdites parties d'extrémité (3, 3') du bras (2, 2') sont les unes des autres reliées par l'intermédiaire de deux poignées (18), placées latéralement par rapport au boîtier de moteur (5) et ayant chacune un bouton de démarrage sur la partie avant.

4. Dispositif de coupe selon la revendication 3, dans lequel ledit bras (2, 2') comprend des moyens élastiques et d'amortissement, configurés pour assurer le mouvement lent et automatique vers le haut du bras (2, 2'), dès que l'opérateur relâche la poignées (18).

5. Dispositif de coupe selon l'une quelconque des revendications précédentes, dans lequel lesdits moyens de coupe (17) sont une lame circulaire (10) ayant un boîtier de protection (20) de la lame qui recouvre entièrement un côté de la lame et en partie, dans la partie supérieure, l'autre côté de la lame.

6. Dispositif de coupe selon la revendication 5, dans lequel ladite lame circulaire (10) est pourvue de deux «grattoirs de lame» et d'une protection (21) de la lame afin d'éviter que des résidus de travail pénètrent à l'intérieur du boîtier de moteur et de protéger la face de la lame, que le boîtier de protection (20) de la lame laisse partiellement découvert.

7. Dispositif de coupe selon l'une quelconque des revendications précédentes, dans lequel ledit boîtier (1) comprend une paroi (22) et un récipient (23) pour intercepter et collecter des résidus de travail, et un pointeur (24) qui éclaire avec une ligne la lame (10) dans son point de contact sur la pièce de travail.

8. Dispositif de coupe selon l'une quelconque des revendications précédentes, dans lequel lesdits moyens de fixation (7, 28) de la pièce de travail sont configurés selon une forme dentée.

9. Dispositif de coupe selon la revendication 8, comprenant en outre des troisièmes moyens de fixation, parallèles à l'axe z, également dentés, qui peuvent être fixés à travers les fentes des premiers moyens de fixation (7, 28) sur des bras coulissants (27), équipés avec des boutons de verrouillage/déverrouillage (29), situés à la fois sur le côté avant et sur le côté arrière du boîtier (1).

10. Dispositif de coupe selon l'une quelconque des revendications précédentes, dans lequel ledit boîtier (1) comprend également le long des deux côtés extérieurs deux appendices mobiles (25), qui pendant la phase de travail, pivotent avec un angle supérieur à 90° par rapport à l'axe z pour retenir tous les résidus de travail.
